Europäisches Patentamt

European Patent Office

Office européen des brevets

(19)

(11) Veröffentlichungsnummer : **0 613 905 A1**

## (12) EUROPÄISCHE PATENTANMELDUNG

(21) Anmeldenummer : 94103099.1

(22) Anmeldetag : 02.03.94

(51) Int. Cl.$^5$ : **C08B 30/10,** C08L 97/02,
C08L 89/04, A01G 9/02,
// (C08L97/02, 3:00),
(C08L97/02, 99:00),
(C08L89/04, 3:00),
(C08L89/04, 99:00)

(30) Priorität : 02.03.93 DE 4306441
29.11.93 DE 4340517

(43) Veröffentlichungstag der Anmeldung :
07.09.94 Patentblatt 94/36

(84) Benannte Vertragsstaaten :
AT BE CH DE DK ES FR GB GR IE IT LI NL PT
SE

(71) Anmelder : Wibmer & Co. KG
Daimlerstrasse 7
D-72124 Pliezhausen (DE)

(72) Erfinder : Kharazipour, Alireza, Dr.
In der Straut 10a
D-37079 Göttingen (DE)
Erfinder : Hüttermann, Aloys, Prof. Dr.
Henry-Dunant-Strasse 20
D-37075 Göttingen (DE)
Erfinder : Trojanowski, Jerzy, Prof. Dr.
Adolf-Ellissenweg 16
D-37077 Göttingen (DE)

(74) Vertreter : Harders, Gerhard, Dr.
Stettiner Strasse 2
D-61184 Karben (DE)

(54) **Verrottbarer Formkörper, insbesondere verrottbarer Pflanztopf.**

(57)    Ein verrottbarer Formkörper auf der Basis von natürlichen pflanzlichen oder tierlschen Fasern, insbesondere ein verrottbarer Pflanztopf ist dadurch gekennzeichnet, daß er
90 bis 50 Gew.-% Fasern und
1 bis 50 Gew.-% einer vorbehandelten Kartoffelpülpe
enthält, wobei die Angaben in Gew.-% sich auf Trockensubstanz beziehen, und
die Kartoffelpülpe durch Einwirkung von Enzymen, die die Faserstruktur der Kartoffelpülpe beeinflussen, vorbehandelt wird, oder
die Teilchen der Kartoffelpülpe durch eine mechanische Vorbehandlung auf eine reilchengröße von weniger als 350 um zerkleinert worden sind.

EP 0 613 905 A1

Die vorliegende Erfindung betrifft einen Formkörper auf der Basis von pflanzlicher oder tierischen Fasern gemäß dem Oberbegriff des Hauptanspruchs.

Mehr oder weniger verrottbare Formkörper auf der Basis von pflanzlichen Fasern sind bekannt. Sie werden überall da verwendet, wo es auf eine zeitlich begrenzte Formhaltung ankommt und nach Ablauf dieser Zeit eine möglichst umweltfreundliche Verrottung des Formkörpers gewährleistet sein soll.

Solche verrottbaren Formkörper werden beispielsweise in der Gärtnerei zur Anzucht von Pflanzen verwendet. Ein Pflanztopf dieser Art ist aus der DE 82 12 729 Ul bekannt. Er besteht aus getränkter Bitumenpappe, die eine relativ lange Verrottungszeit aufweist.

Aufgabe der vorliegenden Erfindung ist die Schaffung eines verrottbaren Formkörpers, insbesondere eines Pflanztopfs, der in einer praktikabel kurzen Zeit völlig verrottbar ist, der außerhalb vom Erdreich eine ausreichende Haltbarkeit aufweist und der vor dem Einbringen in das Erdreich eine verbesserte Stabilität aufweist.

Gelöst wird diese Aufgabe durch einen gattungsgemäßen Formkörper gemäß dem Kennzeichen des Hauptanspruchs. Die Unteransprüche gebe bevorzugte Ausgestaltungen der Erfindung wieder.

Kartoffelpülpe ist ein Abfallprodukt der Stärkeindustrie, das in großen Mengen anfällt. Sie besteht aus der zerkleinerten Kartoffelschale und den Resten des Fruchtfleisches, denen die Kartoffelstärke entzogen worden ist. Versuche habe ergeben, daß Kartoffelpülpe auf pflanzliche oder tierische Fasern keinerlei Bindemittelwirkung ausübt.

Kartoffelpülpe weist im allgemeinen eine mittlere Teilchengröße von etwa 0,5 bis 1,2 mm. Die obere Grenze der Teilchengröße liegt im allgemeinen bei etwa 1,7 mm, die untere Grenze bei etwa 0,4 mm, jeweils in Abhängigkeit von den Bedingungen bei der Verarbeitung. Die Tatsache, daß Teilchen mit einer solchen Größe beispielsweise in Vließgewebe nicht penetrieren können, liefert eine mögliche Erklärung dafür, daß aus der Stärkegewinnung stammende Kartoffelpülpe auf pflanzliche oder tierische Fasern keine Bindungswirkung ausübt.

Überraschenderweise wurde gefunden, daß im Gegensatz hierzu Kartoffelpülpe, die mechanisch auf eine Teilchengröße von weniger als 350 um zerkleinert oder mit Enzymen vorbehandelt worden ist, die die Faserstruktur der Kartoffelpülpe beeinflussen, eine Bindungswirkung auf tierische und pflanzliche Fasern ausübt. Dies gilt insbesondere für vliesartige oder papierartige Faser-Flächengebilde, in die nicht zerkleinerte Pülpeteilchen anscheinend nicht im erforderlichen Maß eindringen können.

Als Enzyme werden dabei vorzugsweise solche eingesetzt, die die Faserstruktur der Kartoffelpülpe beeinflussen. Diese Beeinflussung besteht insbesondere in einem Abbau der Faserstruktur. Beispiele solche Enzyme sind u. a. Pektinasen, Hemicellulasen und/oder Cellulasen. Unter den Pektinasen sind insbesondere zu nennen:

Pektintranseliminasen, Polygalakturonasen, Pektinesterasen und dergleichen,

Hemicellulasen sind beispielsweise Xylanasen, Mannasen, Arabinasen und dergleichen.

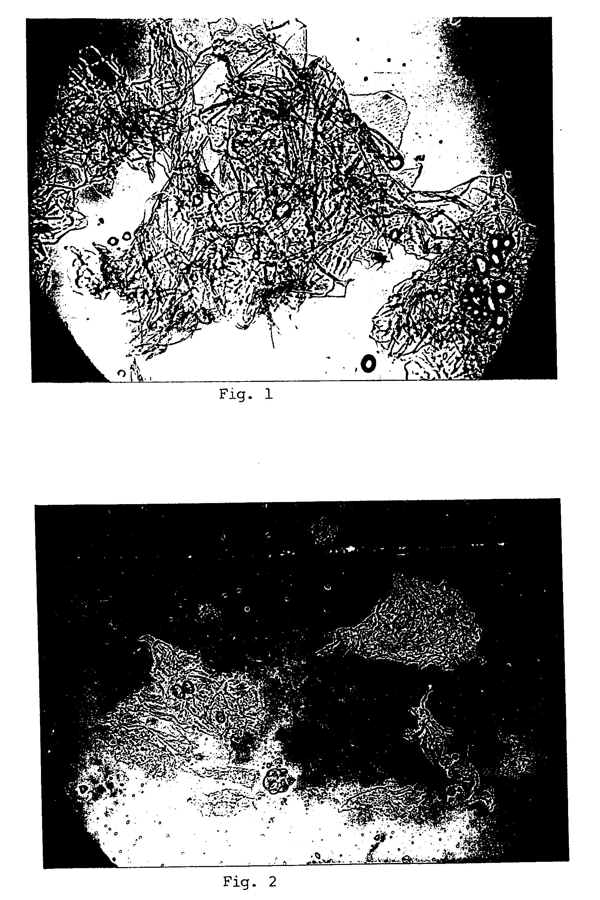

Beim Einsatz solche Enzyme wird die Faserstruktur der Pülpeteilchen nahezu völlig aufgelöst. Dies zeigt ein Vergleich der Abb. 1 (vor der Enzymbehandlung) mit der Abb. 2 (nach der Enzymbehandlung).

Die Enzyme werden in einer Menge eingesetzt, die ausreicht, um die Faserstruktur der Kartoffelpülpe in wirtschaftlich verwertbaren Zeiträumen abzubauen. Bei Verwendung von Pektinasen sind dies beispielsweise etwa 0,1 bis 1000 Units pro g Kartoffelpülpe Trockensubstanz, insbesondere etwa 1 bis 100 Units. Dabei ist die Einheit der Pektinase Pektin-Transeliminase z. B. definiert als diejenige Menge des Enzyms, die eine Zunahme der Absorption bei 235 nm um 0,555/l min in einer 1cm-Meßkuvette bei pH 5,2 und 25° katalysiert, wobei als Substrat eine 0,5%ige Pektinlösung verwendet wird.

Enzymlösungen, die neben Pektinase auch Hemicellulase enthalten, sind im Handel erhältlich, beispielsweise in Form der Handelsware Pektinex.

Als natürliche pflanzliche oder tierische Fasern werden Fasern eingesetzt, die in der in der Natur vorkommenden Form bereits ihre natürliche Faserstruktur aufweisen. Beispiele für eingesetzte Fasern sind unter anderem Flachs, Baumwolle, Jute oder Tierhaare. Insbesondere werden Flachskurzfasern eingesetzt, die eine Faserlänge von weniger als 20 mm aufweisen. Flachskurzfasern sind in der Textilindustrie im allgemeinen nicht verwendbar und stehen deshalb kostengünstig aus heimischer Produktion zur Verfügung.

Bei einer mechanischen Zerkleinerung müssen die eingesetzten Pülpeteilchen auf eine Teilchengröße von weniger als 350 μm zerkleinert werden, bevorzugt auf noch kleinere Teilchengrößen, beispielsweise auf weniger als 300 μm.

Je kleiner die Teilchengröße der Pülpeteilchen ist, um so besser ist ihr Penetrationsvermögen zwischen die Faserlagen und damit ihre Bindungswirkung. Jedoch ist eine Zerkleinerung auf mittlere Teilchengrößen von weniger als 100 um bereits sehr aufwendig und wird daher nur in speziellen Fällen sinnvoll sein.

Zur Zerkleinerung der Pülpeteilchen eignen sich alle bekannten Verfahren, insbesondere mechanische Verfahren. Solche Verfahren sind beispielsweise Zerkleinerung in einem Mischer, Waring-Blendor, in Kugelmühlen, insbesondere Rührwerkskugelmühlen, oder in Homogenisatoren, insbesondere Hochdruckhomogenisatoren, oder Tiefgefrieren und anschließendes Vermahlen.

Die Kartoffelpülpe kann mit beliebigen Wassergehalten eingesetzt werden, solange genügend wässrige Phase zugegen ist, um die Einwirkung des Enzyms zu gewährleisten. Üblicherweise beträgt der Trockensubstanzgehalt der wässrigen Suspension bzw. Lösung etwa 2 bis 25 %, bevorzugt etwa 3 bis 10 Gew.-%. Ein Trockensubstanzgehalt von weniger als 2 Gew.-% erfordert einen unwirtschaftlichen nachträglichen Trocknungsaufwand. Der Trockensubstanzgehalt kann dabei so ausgewählt werden, daß die vorbehandelte Kartoffelpülpe direkt im folgenden Schritt für die Herstellung des Formkörpers eingesetzt werden kann.

Vorteilhafterweise kann die Kartoffelpülpe vor und/oder nach der Behandlung mit den Enzymen mechanisch zerkleinert werden. Dadurch wird die Suspensionsfähigkeit verbessert und die gegebenenfalls nachfolgende Enzymbehandlung erleichtert bzw. beschleunigt.

Durch einen Zusatz von Wasserglas kann die Benetzbarkeit der eingesetzten Fasern verbessert werden. Wasserglas wird in Mengen von etwa 0,5 bis 5 Gew.-%, vorzugsweise 1 bis 3 Gew.-%, bezogen auf das Fasergewicht, eingesetzt.

Zur Herstellung der Formkörper wird die Kartoffelpülpe, die die bei der Stärkegewinnung im allg. mit einem Wassergehalt von etwa 75 bis 95 % anfällt, zunächst nach Bedarf auf einen Feststoffgehalt von weniger als 15 Gew.-% verdünnt. Im allgemeinen wird mit Pülpe gearbeitet, die einen Feststoffgehalt von weniger als 10 Gew.-% aufweist. Die Pülpe kann auch in Form der sogenannten Preßpülpe eingesetzt werden, die einen Feststoffgehalt von etwa 15 bis 25 Gew.-% aufweist. Sie muß wie oben angegeben verdünnt werden.

Die vorbehandelte Kartoffelpülpe wird mit bekannten Verfahren, wie Tränken, Besprühen oder dergleichen auf die Fasern aufgebracht.

Die mit Pülpelösung getränkten Fasern werden dann vorzugsweise zuerst auf mechanischem Wege, z. B. durch Abpressen, oder dergleichen, von überschüssigem Wasser befreit.

Dann erfolgt eine Druck- und Wärmebehandlung, die nacheinander, aber auch gleichzeitig erfolgen kann. Die Wärmebehandlung erfolgt bei Temperaturen von etwa 100 bis 200°C, vorzugsweise bei etwa 140 bis 160° C. Bei diesen Temperaturen erfolgt eine Bindung zwischen den Fasern und den Pülpeteilchen, die in ihrer Wirkung der Bindung mit konventionellen Kunstharzbindemitteln durchaus gleichwertig ist.

Die Wärmebehandlung kann auf folgende Weise erfolgen: Im Durchlauftrockner, über Drahtgewebeband, über Spannrahmen mit Warmluft oder über Trockenzylinder.

Die Wärmebehandlung kann auch gleichzeitig mit der Druckbehandlung in einer heizbaren Presse erfolgen.

Die Druckbehandlung erfolgt im allgemeinen bei Drucken von etwa 5 bis 20 kp/cm$^2$.

Vorzugsweise kommen Drucke von etwa 7 bis 10 kp/cm$^2$ zur Anwendung.

Die Haltbarkeit der verrottbaren Formkörper läßt sich durch den Gehalt an Kartoffelpülpe, Art der pflanzlichen oder tierischen Fasern und Vliesdichte verändern.

Die erfindungsgemäßen Formkörper lassen sich ohne Zusatz von schädlichen Stoffen, wie Fungiziden, Schwermetallen oder ähnlichen Schadstoffen herstellen. Formkörper auf der Basis von Altpapier enthalten solche Schadstoffe und verrotten daher wesentlich langsamer.

Die erfindungsgemäßen Formkörper eignen sich insbesondere in Form von Folien ausgezeichnet zur Herstellung von Pflanztöpfen für die Anzucht von Pflanzen. Die Haltbarkeit und die mechanische Festigkeit sind gut. Eine gute Durchwurzelung ist gegeben. Besonders vorteilhaft ist der Gehalt an Protein und Aminosäuren der Pülpe für das Wachstum der Pflanzen. Eine zusätzliche Stickstoffversorgung wie bei den bekannten Pflanztöpfen auf der Basis von Altpapier ist nicht erforderlich.

Das mit Kartoffelpülpe imprägnierte Material wird durch Bodenpilze aktiv abgebaut. Die Abbaurate liegt in Laborversuchen bei etwa 1 % pro Woche. Dabei werden keine Schadstoffe, wie z. B. Schwermetalle, in den Boden eingebracht.

Die erfindungsgemäßen Formkörper können weitere übliche Zusatzstoffe enthalten. So können z. B. Wachse zugesetzt werden, mit denen sich die Hydrophilie bzw. Hydrophobie beeinflussen läßt.

Die Erfindung wird nachfolgend anhand der Beispiele näher erläutert.

Beispiel 1

1540 g Kartoffel-Naßpülpe mit einem Trockensubstanzgehalt von 13 %, entsprechend 200 g Trockensubstanz, wurden in einem Mischer mit 1540 ml Wasser gemischt und 20 ml Pektinase- mit 17,86 g Trockensubstanz (TS) in wässriger Lösung mit einer Aktivität von 3000 U/ml (Handelsprodukt Pektinex 3 XL) zugegeben. Die Suspension wurde 20 h in einem Fermenter bei 40° inkubiert. Anschließend wurde die Mischung 10 min in einem Homogenisator homogenisiert und dabei mechanisch zerkleinert.

Die Pülpe wurde vor der Behandlung, nach der Enzymbehandlung und nach der mechanischen Behandlung mikroskopisch untersucht. Dabei wurden die folgenden Ergebnisse erhalten:

Mikroskopische Untersuchung mit einer Thomaskammer

|  | Teilchen-größe mm | | Teilchen-anzahl in 1 mm³ | Viskosität mPs.sec |
|---|---|---|---|---|
| Pülpe, unbehandelt | 0,77 | 1) | 1687 | 1000 |
| Pülpe, behandelt mit Pektinex | 0,17 | 2) | 3575 | 175 |
| Pülpe, behandelt mechanisch und mit Pektinex | 0,14 | 2) | 3997 | 105 |

1) Faser-Teilchen Aggregate

2) keine Fasern, klumpige Strukturen

In den folgenden Beispielen wurde die nach Beispiel 1 erhaltene mit Enzym und mechanisch behandelte Pülpesuspension eingesetzt.

Beispiel 2

Die in Beispiel 1 erhaltene Suspension wurde auf ein Vlies aus Flachskurzfasern wie folgt aufgetragen:

Das Vlies mit einer mittleren Dicke von ca. 5 mm und einem Flächengewicht von ca. 380 g/m$^2$ wurde von einer Rolle gezogen und beidseitig mit der Kartoffelpülpe beschichtet. Die Beschichtung wurde auf einer ebenen Unterlage mit einer Gummirollle durchgeführt. Die Pülpe war dickflüssig und lief aus dem Vlies nicht ab. Das getränkte Vlies wurde bei 160° und 8 kp/cm$^2$ zu einer Bahn verpreßt.

Es wurden insgesamt 12 Vliesmatten hergestllt, bei denen teilweise Tannin (0,5%ige wässrige Lösung) und 25% Wasserglas (39 bzw. 50 %ig) zugesetzt wurde. Die Matten hatten folgende Zusammensetzung:

| Matte Nr.1 | Pülpe | |
|---|---|---|
| 2 | " | |
| 3 | " | + Tannin |
| 4 | " | + Tannin |
| 5 | " | + Tannin + Wasserglas 39%ig |
| 6 | " | + Tannin + Wasserglas 39%ig |
| 7 | " | + Tannin + Wasserglas 50%ig |
| 8 | " | + Tannin + Wasserglas 50%ig |
| 9 | " | + Wasserglas 39%ig |
| 10 | " | + Wasserglas 39%ig |
| 11 | " | + Wasserglas 50%ig |
| 12 | " | + Wasserglas 50%ig |

Die Matten wurden hergestellt durch 3 min Verpressen bei 150° und 100 bar.

Das Gewicht der Matten wurde vor der Pülpebehandlung (Gewicht 1) und nach der Pressung (Gewicht 2) ermittelt.

| Matte Nr. | Gewicht I | Gewicht II | Diff. | Diff. in % |
|---|---|---|---|---|
| 1 | 6,64 | | | |
| 2 | 5,24 | | | |
| 3 | 8,06 | | | |
| 4 | 9,73 | | | |
| 5 | 8,49 | 10,52 | 2,03 | 23,9 |
| 6 | 7,76 | 9,94 | 2,18 | 28 |
| 7 | 7,41 | 9,33 | 1,92 | 25,9 |
| 8 | 8,46 | 10,35 | 1,89 | 22,3 |
| 9 | 8,60 | 9,92 | 1,32 | 15,3 |
| 10 | 6,83 | 8,44 | 1,61 | 23,6 |
| 11 | 8,05 | 9,82 | 1,77 | 22 |
| 12 | 7,84 | 9,15 | 1,31 | 16,7 |

Die Gewichtsdifferenz gibt die aufgenommene Menge an Pülpe und deren Zusatzstoffen an.

Beispiel 3

Es wurden Vliesmatten wie in Beispiel 2 hergestellt. Dabei wurde unvorbehandelte Pülpe, wie sie bei der Stärkegewinnung anfällt, mechanisch vorbehandelte und enzymatisch behandelte Pülpe eingesetzt. Dabei ergibt sich, daß mechanisch behandelte Pülpe eine verbesserte Trockenbruchlast aufweist, die aber von enzymatisch vorbehandelter Pülpe weit übertroffen wird.

Die Pülpelösung war wie folgt zusammengesetzt:

1 Tl. Pülpe, unvorbehandelt bzw. vorbehandelt

3 Tl. Wasser

2 % Bienenwachsemulsion, wässrig (50% Wachs in 50% Wasser)

Pressung: 3 min bei 160° und 10 kp/mm³.

Die Trockenbruchlasten betrugen in $N/m^2$

| | längs | quer zur Faser |
|---|---|---|
| ohne Pülpe | 2,12 | 0,3 |
| Pülpe unbehandelt | 22 | 18,7 |
| Pülpe mechan. vorbeh. | 44,7 | 23 |
| Pülpe enzym. vorbeh. | 265,2 | 235,6 |

Beispiel 4

Aus Kurzflachsfasern wird ein Vlies mit ca. 300g/qm hergestellt und aufgerollt.

Kartoffelpülpe wurde in einem Homogenisator auf eine mittlere Teilchengröße von 300 um zerkleinert. Aus der Pülpe wurde folgende Zusammenstzung hergestellt:

100 g zerkleinerte Pülpe

250 ml Wasser

1 % Bienenwachs-Emulsion in 50 % Wasser

Die Komponenten wurden zusammengegeben und in einem Homogenisator 15 min gemischt.

Das Flachsvlies wurde von einer Rolle gezogen und beidseitig mit der Kartoffelpülpe beschichtet. Die Pülpe war dickflüssig und lief aus dem Vlies nicht ab. Das getränkte Vlies wurde auf eine Restfeuchte von 25 % getrocknet und bei 160°C und 8 kp/cm² zu einer Bahn verpreßt.

Der so erhaltene folienartige Formkörper wurde in Schmalbahnen geschnitten und aufgerollt. Aus dem folienartigen Formkörper wurden Formteile gestanzt und zu Pflanztöpfen zusammengesetzt.

Zum Vergleich wurde eine entsprechende Folie ohne Pülpe hergestellt.

Die erhaltenen Schmalbahnen hatten folgende Eigenschaften:

| Bahn | Trockenbruchlast N/mm² | |
|---|---|---|
| | längs der Faser | quer zur Faser |
| ohne Pülpe: | 2,12 | 0,3 |
| mit Pülpe: | 44,71 | 22,78 |
| mit Pülpe: | 49,97 | 33,50 |

Beispiel 5

Es wurde eine Schmalbahn wie in Beispiel 4 hergestellt mit folgender Pülpenzusammensetzung:

100 g vorbehandelte Pülpe
300 ml Wasser
2 % Wachsemulsion 50 % in Wasser
Preßzeit 5 min.

Die Bahn hatte folgende Eigenschaften:

| Trockenbruchlast N/mm² | |
|---|---|
| längs der Faser | quer zur Faser |
| 44,38 | 33,29 |

Beispiel 6

Analog Beispiel 4 wurde aus einem Flachs-Jute-Vlies (50:50) mit folgender Pülpelösung eine Schmalbahn hergestellt:

1 Tl. Pülpe, zerkleinert, 20 % TS
3,5 Tl. Wasser
1 % Bienenwachsemulsion 50 % in Wasser
Pressung: 4 min bei 160°C und 10 kp/cm².

Die Trockenbruchlast betrug in zwei Parallelversuchen:

| längs zur Faser | quer zur Faser |
|---|---|
| 50 N/mm² | 33,5 N/mm² |
| 44,8 " | 33,3 " |

Beispiel 7

Analog Beispiel 4 wurden Parallelversuche mit zerkleinerter und nicht vorbehandelter Kartoffelpülpe durchgeführt.

Die Pülpelösung war jeweils wie folgt zusammengesetzt:

1 Tl Pülpe, vorbehandelt bzw. unvorbehandelt
3 Tl Wasser
2 % Bienenwachs-Emulsion wie in Beispiel
Pressung: 3 min bei 160°C und 10 kp/cm²

Die Trockenbruchlasten betrugen (in N/mm$^2$) :

| Pülpe | | | |
|---|---|---|---|
| unbehandelt | | behandelt | |
| längs | quer | längs | quer |
| 22 | 18,7 | 44,7 | 23 |
| ohne Pülpe | | | |
| 2,12 | 0,3 | | |

**Patentansprüche**

1. Verrottbarer Formkörper auf der Basis von natürlichen pflanzlichen oder tierischen Fasern, insbesondere verrottbarer Pflanztopf,
   **dadurch gekennzeichnet, daß**
   er
   90 bis 50 Gew.-% Fasern und
   1 bis 50 Gew.-% einer vorbehandelten Kartoffelpülpe
   enthält, wobei die Angaben in Gew.-% sich auf Trockensubstanz beziehen, und
   die Kartoffelpülpe durch Einwirkung von Enzymen, die die Faserstruktur der Kartoffelpülpe beeinflussen, vorbehandelt wird, oder
   die Teilchen der Kartoffelpülpe durch eine mechanische Vorbehandlung auf eine Teilchengröße von weniger als 350 um zerkleinert worden sind.

2. Formkörper nach Anspruch 1, dadurch gekennzeichnet, daß die Enzyme aus Pektinasen, Hemicellulasen und/oder Cellulasen bestehen.

3. Formkörper nach mindestens einem der Ansprüche 1 bis 2, dadurch gekennzeichnet, daß die Kartoffelpülpe in wässriger Suspension mit einem Trockensubstanzgehalt von 2 bis 25 Gew.-% einer Enzymbehandlung unterworfen wurde.

4. Formkörper nach mindestens einem der Ansprüche 1 bis 3, dadurch gekennzeichnet, daß als Enzym Pektinase von 0,1 bis 1000 U/g Kartoffelpülpe (TS) eingesetzt wird.

5. Formkörper nach mindestens einem der Ansprüche 1 bis 4, dadurch gekennzeichnet, daß er
   97 bis 70 Gew.-% Fasern und
   3 bis 30 Gew.-% vorbehandelte Kartoffelpülpe
   enthält.

6. Formkörper nach mindestens einem der Ansprüche 1 bis 4, dadurch gekennzeichnet, daß er
   90 bis 80 Gew.-% Fasern und
   10 bis 20 Gew -% vorbehandelte Kartoffelpülpe
   enthält.

7. Formkörper nach Anspruch 1, dadurch gekennzeichnet, daß als Faser Flachs-Kurzfasern mit einer (mittleren) Faserlänge von etwa 5 bis 20 mm enthalten sind.

8. Formkörper nach Anspruch 1, dadurch gekennzeichnet, daß die Faser in Form eines vliesartigen bzw. papierartigen Flächengebildes enthalten ist.

9. Formkörper nach Anspruch 1, dadurch gekennzeichnet, daß die Teilchen der Kartoffelpülpe auf eine mittlere Teilchengröße von weniger als 300 μm zerkleinert worden sind.

10. Verfahren zur Herstellung eines Formkörpers nach einem oder mehreren der Ansprüche 1 bis 9, dadurch gekennzeichnet, daß
die vorbehandelte Pülpe auf ein vlies- oder papierartiges Flächengebilde aufgebracht und mittels Spannrahmen oder Drahtgewebförderband zu einem mit einer Heizvorrichtung versehenen Glättwerk oder Kalibrierkalander gebracht wird, wo es auf eine bestimmte Dicke gebracht und getrocknet wird.

11. Verfahren nach Anspruch 10, dadurch gekennzeichnet, daß das imprägnierte Flächengebilde auf eine Dicke von etwa 1,0 bis 1,4 mm gebracht wird.

12. Verfahren zur Herstellung eines Formkörpers nach einem oder mehreren der Ansprüche 1 bis 9, dadurch gekennzeichnet, daß
die Fasern mit der Kartoffelpülpe, nach Bedarf unter Zusatz von Wasser, zu einem Brei angerührt werden, in Formen gefüllt und entwässert, gepreßt und getrocknet werden.

13. Verfahren zur Herstellung eines Formkörpers nach einem oder mehreren der Ansprüche 1 bis 9, dadurch gekennzeichnet, die vorbehandelte Pülpe mit den Fasern zu einem Brei verarbeitet, in Formen gefüllt und einer Wärme- und Druckbehandlung unterzogen wird.

14. Verfahren zur Vorbehandlung der eingesetzten Kartoffelpülpe, dadurch gekennzeichnet, daß
vor und/oder nach der Enzymbehandlung eine mechanische Zerkleinerung durchgeführt wird.

15. Verfahren nach Anpruch 14, dadurch gekennzeichnet, daß die mechanische Zerkleinerung in einer Mühle oder einem Homogenisator durchgeführt wird.

Fig. 1

Fig. 2

**Europäisches Patentamt**

# EUROPÄISCHER RECHERCHENBERICHT

Nummer der Anmeldung

EP 94 10 3099

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | DE-A-28 356 (FLIESSBACH)<br>* Seite 1, linke Spalte; Ansprüche *<br>--- | 1-6,9,13 | C08B30/10<br>C08L97/02<br>C08L89/04 |
| Y | STARKE.<br>Bd. 32, Nr. 1 , 1980 , WEINHEIM DE<br>Seiten 14 - 20<br>W. KEMPF 'Beitrage zur mechanischen Entwässerung von Kartoffelnpüulpe'<br>* Seite 15, Zeile 55 - Seite 17, Zeile 15 *<br>--- | 1-6,9,13 | A01G9/02<br>//(C08L97/02,<br>3:00),<br>(C08L97/02,<br>99:00),<br>(C08L89/04,<br>3:00),<br>(C08L89/04,<br>99:00) |
| Y | FR-A-842 167 (STÄRKE FABRIK GOLSSEN W. SCHULZE & CO.)<br>* Seite 1, Zeile 1 - Zeile 10 *<br>* Seite 1, Zeile 17 - Zeile 28 *<br>--- | 1-6,9,13 | |
| A | WO-A-91 05020 (PELZ)<br>* das ganze Dokument *<br>--- | 1,5,6,13 | |
| A | DE-A-12 28 912 (LACOSTE)<br>* Ansprüche; Beispiele *<br>--- | 1,13 | RECHERCHIERTE SACHGEBIETE (Int.Cl.5) |
| A | DE-A-14 70 938 (PULLEN MOLDED PRODUCTS INC.)<br>* das ganze Dokument *<br>--- | 1 | C08B<br>C08L<br>A01G |
| P,A | DE-A-42 40 174 (NEISSER)<br>* Ansprüche *<br>--- | 1,5-8 | |
| A | DATABASE WPI<br>Week 9146,<br>Derwent Publications Ltd., London, GB;<br>AN 91-332894<br>& AU-D-7 359 691 (COMMONWEALTH SCIENT. ORG.) 26. September 1991<br>* Zusammenfassung *<br>----- | 1,7 | |

Der vorliegende Recherchenbericht wurde für alle Patentansprüche erstellt

| Recherchenort | Abschlußdatum der Recherche | Prüfer |
|---|---|---|
| DEN HAAG | 20. Mai 1994 | Mazet, J-F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)